# EUROPÄISCHE PATENTSCHRIFT

(11) **EP 2 318 130 B1**
(45) Veröffentlichungstag und Bekanntmachung des Hinweises auf die Patenterteilung: **30.04.2014**
(21) Anmeldenummer: 09777243.8
(22) Anmeldetag: 16.07.2009
(51) Int. Cl.: B01J 21/06, B01J 21/18, B01J 37/08, H01M 4/00

(54) **VERFAHREN ZUR HERSTELLUNG VON MIT METALLOXIDEN BELADENEN KOHLENSTOFFSUBSTRATEN UND AUF DIESE WEISE HERGESTELLTE KOHLENSTOFFSUBSTRATE**
PROCESS FOR PRODUCING CARBON SUBSTRATES LOADED WITH METAL OXIDES AND CARBON SUBSTRATES PRODUCED IN THIS WAY
PROCÉDÉ DE FABRICATION DE SUBSTRATS CARBONÉS CHARGÉS D'OXYDES MÉTALLIQUES ET SUBSTRATS CARBONÉS FABRIQUÉS PAR CE PROCÉDÉ

(30) Priorität: 17.07.2008 DE 102008033574
(43) Veröffentlichungstag der Anmeldung: 11.05.2011
(73) Patentinhaber: Blücher GmbH, 40699 Erkrath (DE)
(72) Erfinder: SCHULZ, Christof, 50672 Köln (DE); WIGGERS, Hartmut, 48734 Reken (DE)
(74) Vertreter: Von Rohr
(86) Internationale Anmeldenummer: PCT/EP2009/005182
(87) Internationale Veröffentlichungsnummer: WO 2010/006796

(56) Entgegenhaltungen:
- WO-A-2008/100573
- DE-U1-202004 005 677
- US-A1- 2005 215 068

## Beschreibung

Die vorliegende Erfindung betrifft das Gebiet der Katalyse, insbesondere der Katalysatormaterialien.

Insbesondere betrifft die vorliegende Erfindung ein Verfahren zur Herstellung von mit Metalloxiden beladenen Kohlenstoffsubstraten, insbesondere von metalloxidische Nanopartikel enthaltenden Kohlenstoffmaterialien, welche sich vorzugsweise für die Verwendung in und/oder als Katalysatoren oder aber in und/oder als Bipolarplatten eignen, sowie die auf diese Weise erhältlichen Kohlenstoffsubstrate selbst und deren Verwendung, insbesondere in und/oder als Katalysatoren bzw. in und/oder als Bipolarplatten.

Es gibt eine Vielzahl von chemischen Reaktionen, welche nur in Anwesenheit eines Katalysators ablaufen bzw. nur in Anwesenheit eines Katalysators zu nennenswerten Ausbeuten an Produkt führen.

Unter dem Begriff der Katalyse versteht man dabei im allgemeinen die Veränderung bzw. Herabsetzung der Aktivierungsenergie und somit die Veränderung der Reaktionsgeschwindigkeit einer chemischen Reaktion durch Beteiligung eines Katalysators ohne die Veränderung des thermodynamischen Gleichgewichts.

Der Begriff des Katalysators bezeichnet dabei einen Stoff, welcher die Aktivierungsenergie der betreffenden chemischen Reaktion verringert und somit die Reaktionsgeschwindigkeit dieser chemischen Reaktion beeinflußt, ohne dabei selbst verbraucht oder umgesetzt zu werden. Der Katalysator geht unverändert aus der Gesamtreaktion wieder hervor und kann somit mehrere Katalysezyklen durchlaufen.

Da über 80 % aller industriellen Chemieerzeugnisse während ihrer Herstellung mit Katalysatoren in Kontakt kommen, ist die Wertschöpfung durch diese sehr hoch und von erheblicher wirtschaftlicher Bedeutung. Bei mehr als 80 % aller bekannten, industriellen chemischen Prozesse kommen somit Katalysatoren zum Einsatz; ohne die Anwesenheit von Katalysatoren würden die betreffenden chemischen Reaktionen nicht oder allenfalls sehr viel langsamer bzw. unvollständiger verlaufen.

In einer Vielzahl katalysierter chemischer Prozesse kommen sogenannte heterogene Katalysatoren zum Einsatz. Von einer heterogenen Katalyse wird gesprochen, wenn bei einer chemischen Reaktion der Katalysator einerseits und die reagierenden Stoffe bzw. Edukte andererseits in unterschiedlichen Aggregatzuständen vorliegen. Der bei weitem am häufigsten eingesetzte Aggregatzustand heterogener Katalysatoren ist die feste Form. Hierbei besteht der Katalysator entweder vollständig aus der aktiven Komponente (sogenannte Vollkatalysatoren) oder die eigentliche wirksame aktive Komponente wird auf ein Trägermaterial aufgebracht, was meistens der Fall ist (sogenannte geträgerte Katalysatoren oder Trägerkatalysatoren). Hierbei kann beispielsweise ein geeigneter Träger (z. B. Kohlenstoff, wie z. B. Aktivkohle, Aluminiumoxid, Siliziumoxid etc.) mit der eigentlich katalytisch aktiven Komponente beaufschlagt, insbesondere hiermit imprägniert oder dergleichen, werden.

So finden beispielsweise geträgerte Katalysatoren auf Basis von metallischen Oxiden, wie Titandioxid, Vanadiumpentoxid und Wolframoxid, vielfache Anwendung, beispielsweise bei der selektiven katalytischen Reduktion (synonym auch als SCR bzw. Selective Catalytic Reduction bezeichnet) von Stickoxiden in Abgasen von Feuerungsanlagen, Müllverbrennungsanlagen, Gasturbinen, Industrieanlagen, Motoren etc. Verwendung, wobei Stickoxide selektiv reduziert werden, während unerwünschte Nebenreaktionen, wie beispielsweise die Oxidation von Schwefeldioxid zu Schwefeltrioxid, weitgehend unterdrückt werden. Beispielsweise wird das vorgenannte SCR-Verfahren in der Fahrzeugtechnik angewendet, um bei Dieselfahrzeugen die Schadstoffemissionen zu senken.

Speziell das zuvor erwähnte Titandioxid, vorzugsweise in kristalliner Form, wie Rutil und/oder Anatas, kann als heterogener Katalysator insbesondere in der sogenannten Photokatalyse Verwendung finden. So werden beispielsweise TiO₂-Nanopartikel für sogenannte selbstreinigende Oberflächen genutzt, wobei durch Einstrahlung von UV-Strahlung organische Materialien auf den betreffenden Oberflächen zersetzt werden, so daß diese Oberflächen sauber bleiben und antimikrobiell wirken.

Die aus dem Stand der Technik bekannten Trägerkatalysatoren weisen jedoch eine Reihe von Nachteilen auf: Zum einen liegt die katalytisch aktive Komponente oftmals nicht in hinreichend kleiner Teilchenform vor, so daß nicht immer eine optimale (spezifische) Oberfläche für die Katalyse zur Verfügung steht. Weiterhin muß oftmals mit einem Überschuß an katalytisch aktiver Komponente verfahren werden, da bei der Beladung des Trägermaterials ein Teil der katalytisch aktiven Komponente nicht frei zugänglich ist für die Katalyse.

Ein weiterer Nachteil der aus dem Stand der Technik bekannten Trägerkatalysatoren besteht insbesondere darin, daß die katalytisch aktive Komponente nicht immer hinreichend auf dem Träger immobilisiert ist, insbesondere die katalytisch aktive Komponente während der Reaktion, insbesondere unter den oftmals extremen Reaktionsbedingungen, auf der Trägeroberfläche migriert und somit keine gleichmäßige Verteilung mehr über die gesamte Trägeroberfläche vorliegt; diese unerwünschte Migration der katalytisch aktiven Komponente wird oftmals noch durch die Kristallisationsenthalpie verstärkt. Die üblicherweise als Trägermaterialen eingesetzten Materialien (z. B. Kohlenstoff etc.) gewähren meist aufgrund ihres unpolaren Charakters keine ausreichende immobilisierung der katalytisch aktiven Komponente. Hierdurch kann auch die elektrische Leitfähigkeit unter Umständen negativ beeinflußt werden.

Schließlich ist als Nachteil der aus dem Stand der Technik bekannten Trägerkatalysatoren auch die Tatsache zu erwähnen, daß diese unter den zum Teil extremen Katalysebedingungen nicht immer ausreichend chemisch und/oder mechanisch stabil sind, um für ausreichend lange Lebensdauern eingesetzt zu werden.

Die DE 20 2004 005 677 U1 betrifft einen kohlenstoffhaltigen Photokatalysator auf Basis von Titandioxid, welcher gegenüber üblichen Photokatalysatoren eine erheblich erhöhte Leistungsfähigkeit aufweisen soll.

Die US 2005/0215068 A1 betrifft die Bereitstellung poröser Grundkörper mit netzwerkartiger Struktur, wobei die netzwerkartige Struktur aus einem inneren Teil und einer Oberfläche besteht, der innere Teil im Wesentlichen aus kohlenstoffhaltigem Material besteht und die Oberfläche ein oxidischer Halbleiter ist.

Schließlich beschreibt die WO 2008/100573 A1 verschiedene Verfahren zur Herstellung spezieller Aktivkohlematerialien, unter anderem auch ein Verfahren zur Herstellung von Aktivkohle unter Zuhilfenahme von Nanopartikeln.

Der vorliegenden Erfindung liegt daher die Aufgabe zugrunde, für die Verwendung in bzw. als Katalysatoren geeignete Materialien und ein entsprechendes Verfahren zu deren Herstellung bereitzustellen, wobei die zuvor geschilderten Nachteile des Standes der Technik zumindest teilweise vermieden oder aber wenigstens abgeschwächt werden sollen.

Zur Lösung des zuvor geschilderten Problems schlägt die vorliegende Erfindung ein Verfahren nach Anspruch 1 vor. Gegenstand der vorliegenden Erfindung - gemäß einem **ersten** Aspekt der vorliegenden Erfindung - ist somit ein Verfahren zur Herstellung eines mit Metalloxiden beladenen Kohlenstoffsubstrats in Form eines metalloxidische Nanopartikel enthaltenden Kohlenstoffmaterials nach Anspruch 1; weitere, vorteilhafte Ausgestaltungen dieses Erfindungsaspekts sind Gegenstand der diesbezüglichen Unteransprüche.

Weiterer Gegenstand der vorliegenden Erfindung - gemäß einem **zweiten** Aspekt der vorliegenden Erfindung - sind die nach dem erfindungsgemäßen Verfahren erhältlichen Materialien bzw. Produkte, wie sie in Anspruch 10 definiert sind; weitere, vorteilhafte Ausgestaltungen dieses Erfindungsaspekts sind Gegenstand der diesbezüglichen Unteransprüche.

Wiederum weiterer Gegenstand der vorliegenden Erfindung - gemäß einem **dritten** Aspekt der vorliegenden Erfindung - ist die Verwendung der nach dem erfindungsgemäßen Verfahren erhältlichen Materialien bzw. Produkte als Katalysator bzw. in der Herstellung von Katalysatoren, gemäß Anspruch 17.

Des weiteren ist ein wiederum weiterer Gegenstand der vorliegenden Erfindung-gemäß einem **vierten** Aspekt der vorliegenden Erfindung - ein Katalysator gemäß Anspruch 18; weitere, vorteilhafte Ausgestaltungen sind Gegenstand des diesbezüglichen Unteranspruchs.

Wiederum weiterer Gegenstand der vorliegenden Erfindung - gemäß einem **fünften** Aspekt der vorliegenden Erfindung - ist die Verwendung der nach dem erfindungsgemäßen Verfahren erhältlichen Materialien bzw. Produkte als Bipolarplatten bzw. in der Herstellung von Bipolarplatten gemäß Anspruch 20.

Schließlich ist ein wiederum weiterer Gegenstand der vorliegenden Erfindung-gemäß einem **sechsten** Aspekt der vorliegenden Erfindung - ist eine Bipolarplatte gemäß Anspruch 21.

Es versteht sich von selbst, daß nachfolgend solche Ausführungen, welche zur Vermeidung von Wiederholungen nur zu einem erfindungsgemäßen Aspekt gemacht werden, auch für die anderen Erfindungsaspekte entsprechend gelten, ohne daß dies ausdrücklich vermerkt oder hierauf hingewiesen ist.

Gleichermaßen versteht es sich von selbst, daß bei allen nachfolgend noch genannten (Zahlen-)Werten und Bereichsangaben der Fachmann anwendungsbezogen oder einzelfallbedingt von den genannten (Zahlen-)Werten und Bereichen abweichen kann, ohne daß der Rahmen der vorliegenden Erfindung verlassen ist.

Gegenstand der vorliegenden Erfindung - gemäß einem **ersten** Aspekt der vorliegenden Erfindung - ist somit ein Verfahren zur Herstellung eines mit Metalloxiden beladenen Kohlenstoffsubstrats in Form eines metalloxidische Nanopartikel enthaltenden Kohlenstoffmaterials, welches sich vorzugsweise für die Verwendung in einem Katalysator (z. B. als Katalysatorträgermaterial) oder als Katalysator eignet, wobei in einem ersten Verfahrensschritt Nanopartikel von Metalloxiden in eine Matrix auf Basis mindestens eines organischen Polymers eingebracht werden, insbesondere hierin dispergiert werden, und nachfolgend in einem zweiten Verfahrensschritt die die Nanopartikel enthaltende Polymermatrix zu Kohlenstoff carbonisiert wird, gefolgt von einem dritten Verfahrensschritt der Aktivierung. Das auf diese Weise resultierende Kohlenstoffmaterial (d. h. also das Carbonisat oder aber das Aktivat) kann schließlich in einem abschließenden Verfahrensschritt gegebenenfalls mit mindestens einer katalytisch aktiven, insbesondere metallischen Komponente (vorzugsweise ausgewählt aus mindestens einem Edelmetall oder Halbedelmetall oder dessen Salz, bevorzugt aus der Gruppe von Platin, Palladium, Kupfer, Silber, Gold, Ruthenium, Rhodium, Iridium und/oder Osmium sowie deren Kombinationen und Salzen) versehen bzw. beaufschlagt werden, insbesondere mittels Imprägnierung; hierbei dient das erfindungsgemäße Kohlenstoffmaterial als Matrix und Trägermaterial für die (halb-)edelmetallbasierten Katalysatoren (d. h. die Edelmetalle bzw. Halbedelmetalle oder deren Salze, wie zuvor definiert), wobei die polaren, in das Kohlenstoffmaterial eingelagerten Metalloxide bzw. Metalloxidnanopartikel sozusagen als "Ankerpunkte" für die (Halb-)Edelmetalle dienen, da letztere bevorzugt an diese polaren Ankerpunkte und weniger an die weitgehend unpolare Kohlenstoffoberfläche anbinden.

Gegenstand der vorliegenden Erfindung ist somit ein Verfahren zur Herstellung eines mit Metalloxiden beladenen Kohlenstoffsubstrats in Form eines metalloxidische Nanopartikel enthaltenden Kohlenstoffmaterials, welches für die Verwendung in oder als Katalysator(en) geeignet ist,
wobei in einem ersten Verfahrensschritt Nanopartikel von Metalloxiden in eine Matrix auf Basis mindestens eines organischen Polymers eingebracht werden, insbesondere hierin dispergiert werden, und
wobei nachfolgend in einem zweiten Verfahrensschritt die die Nanopartikel enthaltende Polymermatrix zu Kohlenstoff carbonisiert wird, gefolgt von einem dritten Verfahrensschritt der Aktivierung, wobei die Carbonisierung unter zumindest im wesentlichen inerten Bedingungen und bei Temperaturen im Bereich von 300 bis 1.500 °C für eine Zeitdauer von 0,1 bis 20 Stunden durchgeführt wird und wobei die Aktivierung unter oxidierenden Bedingungen bei Temperaturen im Bereich von 500 bis 2.000 °C für eine Zeitdauer von 0,1 bis 20 Stunden durchgeführt wird,
so daß ein poröses Kohlenstoffsubstrat auf Basis von Aktivkohle mit hierin eingelagerten metalloxidischen Nanopartikeln resultiert, wobei die metalloxidischen Nanopartikel in solchen Mengen eingesetzt werden, daß der volumenbezogene Gehalt an metalloxidischen Nanopartikein im Kohlenstoffsubstrat 0,01 bis 20 Vol.-% beträgt, bezogen auf das Kohlenstoffsubstrat, oder daß der massenbezogene Gehalt an metalloxidischen Nanopartikeln im Kohlenstoffsubstrat 0,1 bis 25 Gew.-% beträgt, bezogen auf das Kohlenstoffsubstrat, und wobei die metalloxidischen Nanopartikel eine mittlere Partikelgröße im Bereich von 0,5 bis 500 nm aufweisen und kristallin ausgebildet sind.

Die vorstehende Formulierung, daß das erfindungsgemäße metalloxidische Nanopartikel enthaltende Kohlenstoffmaterial sich für die Verwendung in einem Katalysator oder als Katalysator eignet, meint insbesondere, daß das erfindungsgemäße, mit Metalloxiden beladene Kohlenstoffsubstrat sowohl als Katalysator selbst oder aber alternativ auch nur als Bestandteil eines Katalysators eingesetzt werden kann, wobei im letztgenannten Fall das erfindungsgemäße, mit Metalloxiden beladene Kohlenstoffsubstrat entweder katalytisch aktive Komponente oder Trägermaterial für den Katalysator sein kann. Insbesondere vorteilhaft ist dabei eine Ausführungsform, gemäß welcher das erfindungsgemäße, mit Metalloxiden beladene Kohlenstoffsubstrat als Trägermaterial für einen Katalysator eingesetzt wird, wobei bei dieser Ausführungsform - wie zuvor beschrieben - das erfindungsgemäße Kohlenstoffmaterial (d. h. also das Carbonisat oder aber das Aktivat) mit mindestens einer katalytisch aktiven, insbesondere metallischen Komponente (vorzugsweise ausgewählt aus mindestens einem Edelmetall oder Halbedelmetall oder dessen Salz, bevorzugt aus der Gruppe von Platin, Palladium, Kupfer, Silber, Gold, Ruthenium, Rhodium, Iridium und/oder Osmium sowie deren Kombinationen und Salzen) versehen bzw. beaufschlagt, insbesondere hiermit imprägniert sein kann; hierbei dient das erfindungsgemäße Kohlenstoffmaterial, d. h. die Matrix aus Kohlenstoff und hierin eingelagerten Metalloxide, als Trägermaterial für die (halb-)edelmetallbasierten Katalysatoren (d. h. die Edelmetalle bzw. Halbedelmetalle oder deren Salze, wie zuvor definiert), wie zuvor beschrieben.

Mit dem erfindungsgemäßen Verfahren und den hiermit hergestellten Materialien bzw. Produkten sind eine Vielzahl von Vorteilen verbunden, von denen nachfolgend nur einige Vorteile herausgestellt werden sollen:

Durch die Einlagerung der metalloxidischen Nanopartikel in eine poröse Matrix auf Basis von Kohlenstoff wird bei der Verwendung dieses Materials als Katalysator bzw. bei der Verwendung dieses Materials für die Herstellung von Katalysatoren gewährleistet, daß die Oberflächen der eingelagerten metalloxidischen Nanopartikel frei zugänglich sind für die katalytischen Prozesse und somit eine effiziente Katalyse bewirkt werden kann.

Durch die erfindungsgemäß vorgesehene Einbettung der metalloxidischen Nanopartikel in die poröse Kohlenstoffmatrix mittels des zuvor geschilderten erfindungsgemäßen Verfahrens werden die metalloxidischen Nanopartikel immobilisiert, d. h. die metalloxidischen Nanopartikel können ihre Position im Kohlenstoffsubstrat nicht verändern, insbesondere nicht auf der Trägeroberfläche wandern, so daß die diesbezüglichen Nachteile von Katalysatormaterialien des Standes der Technik, wie sie z. B. durch herkömmliche Imprägnierverfahren oder dergleichen hergestellt sind, in effizienter Weise vermieden werden können. Gleichzeitig wird durch die Porosität der Matrix eine ausgezeichnete Zugänglichkeit der katalytisch aktiven Komponente für die katalytischen Prozesse gewährleistet.

Des weiteren wird durch die Einlagerung der Metalloxide in Form von Nanopartikeln eine hohe spezifische Oberfläche an Metalloxiden bereitgestellt, was in bezug auf die Durchführung der katalytischen Prozesse bei der Anwendung dieser Materialien von großem Vorteil ist.

Gleichermaßen kann das erfindungsgemäße Kohlenstoffmaterial mit den hierin eingelagerten metalloxidischen Nanopartikein als chemisch äußerst beständige Matrix bzw. als Trägermaterial für (weitere) katalytisch aktive Komponenten (vorzugsweise ausgewählt aus mindestens einem Edelmetall oder Halbedelmetall oder dessen Salz, bevorzugt aus der Gruppe von Platin, Palladium, Kupfer, Silber, Gold, Ruthenium, Rhodium, Iridium und/oder Osmium sowie deren Kombinationen und Salzen) dienen, bevorzugt für insbesondere nanoskalige (Halb-)Edelmetallkatalysatoren, welche sich beispielsweise durch Imprägnierung in die erfindungsgemäßen Kohlenstoffmaterialien einbringen bzw. hieran fixieren oder anbinden lassen: wie zuvor beschrieben, dienen dabei die polaren, in das Kohlenstoffmaterial eingelagerten Metalloxide bzw. Metalloxidnanopartikel als polare Ankerpunkte für die (Halb-)Edelmetall-Katalysatoren.

Durch die Fixierung der metalloxidischen Nanopartikel in der Kohlenstoffmatrix, insbesondere mittels in-situ-Polymerisation in Gegenwart der metalloxidischen Nanopartikel, und die nachfolgende Carbonisierung (synonym auch als "Verkokung", "Pyrolyse", "Abbrand" oder dergleichen bezeichnet) wird einerseits ein mechanisch besonders stabiles System bereitgestellt, welches andererseits eine hohe spezifische Oberfläche aufweist und zudem eine gute Zugänglichkeit des katalytisch aktiven Metalloxidmaterials bzw. der hieran oder hierauf gegebenenfalls fixierten (Halb-)Edelmetallkatalysatoren gewährleistet.

Die erfindungsgemäßen Materialien verfügen auch über ausgezeichnete mechanische Eigenschaften, was ihre Verwendung als bzw. in Katalysatoren begünstigt.

Die erfindungsgemäß erhältlichen Produkte eignen sich somit aus den vorgenannten Gründen zur Herstellung von Katalysatoren bzw. Katalysatormaterialien (z. B. Trägermaterialien für Katalysatoren) aller Art, da sie neben den geforderten mechanischen Festigkeiten auch über die entsprechenden Oberflächen und deren Zugänglichkeit für katalytische Prozesse verfügen.

Erfindungsgemäß gelingt es somit überraschend, Materialien mit den vorgenannten Eigenschaften bereitzustellen, welche die zuvor geschilderten Nachteile des Standes der Technik in effizienter Weise vermeiden bzw. abschwächen. Es resultiert ein poröses Kohlenstoffsubstrat mit hierin eingelagerten metalloxidischen Nanopartikeln, insbesondere Titandioxidnanopartikeln (TiO₂-Nanopartikeln), Siliziumdioxidnanopartikeln (SiO₂-Nanopartikeln), Aluminiumoxidnanopartikeln (Al₂O₃-Nanopartikeln), Wolframoxidnanopartikeln (WO₃-Nanopartikeln), Vanadiumoxidnanopartikeln (V₂O₅-Nanopartikeln), Eisenoxidnanopartikein (Fe₂O₉-Nanopartikeln und/ oder Fe₃O₄-Nanopartikeln), etc., vorzugsweise TiO₂-Nanopartikeln.

Was die eingesetzten metalloxidischen Nanopartikel anbelangt, so handelt es sich erfindungsgemäß um Partikel mit einer mittleren Partikelgröße (D50), insbesondere mit einer mittleren Kristallitgröße (D50), im Bereich von 0,5 bis 500 nm, vorzugsweise 1 bis 250 nm, besonders bevorzugt 2 bis 100 nm, ganz besonders bevorzugt 5 bis 75 nm.

Die mittleren Partikelgrößen bzw. Kristallitgrößen lassen sich beispielsweise aus Histogrammen von Transmissionselektronenmikroskopie-Aufnahmen oder aus Röntgendiffraktogrammen oder gegebenenfalls auch auf Basis der BET-Oberfläche bestimmen.

Typischerweise können für die erfindungsgemäßen Zwecke beispielsweise durch Gasphasensynthese, wie Flammensynthese, Mikrowellenplasmasynthese oder dergleichen hergestellte, vorzugsweise kristalline metalloxidische Nanopartikel (z. B. TiO₂, SiO₂ Al₂O₃, WO₃, V₂O₅, Fe₂O₃, Fe₃O₄ etc.) eingesetzt werden. Geeignete kristalline metalloxidische Nanopartikel lassen sich beispielsweise in einem Flammenreaktor ausgehend von geeigneten Ausgangsverbindungen erhalten. Dies ist dem Fachmann als solches bekannt, so daß es an dieser Stelle keiner weitergehenden diesbezüglichen Einzelheiten bedarf.

Im Rahmen der vorliegenden Erfindung sind die erfindungsgemäß einzusetzenden metalloxidischen Nanopartikel kristallin ausgebildet; dies ist im Hinblick auf die Verwendung für katalytische Zwecke von besonderem Vorteil. Insbesondere liegt der Kristallinitätsgrad der eingesetzten metalloxidischen Nanopartikel bei mindestens 70 %, insbesondere bei mindestens 80 %, vorzugsweise bei mindestens 90 %, besonders bevorzugt bei mindestens 95 %. Ganz besonders bevorzugt werden vollständig kristallin ausgebildete metalloxidische Nanopartikel eingesetzt.

Was die metalloxidischen Nanopartikel anbelangt, so können diese ausgewählt sein aus Nanopartikeln von katalytisch aktiven und/oder chemisch und/oder thermisch beständigen Metalloxiden (z. B. TiO₂, SiO₂ Al₂O₃, WO₃, V₂O₅, Fe₂O₃, Fe₃O₄ etc.). Bevorzugt sind Nanopartikel von Metalloxiden der Übergangsmetalle des Periodensystems der Elemente sowie deren Mischungen und Legierungen. Ganz besonders bevorzugt sind Nanopartikel von Metalloxiden aus der Gruppe von Titandioxid (TiO₂), Siliziumdioxid (SiO₂), Aluminiumoxid (Al₂O₃), Wolframoxid (WO₃), Vanadiumoxid (V₂O₅) und/oder Eisenoxiden (Fe₂O₃ und/oder Fe₃O₄).

Gemäß einer erfindungsgemäß bevorzugten Ausführungsform werden als metalloxidische Nanopartikel Titandioxidnanopartikel (TiO₂-Nanopartikel), Siliziumdioxidnanopartikel (SiO₂-Nanopartikel), Aluminiumoxidnanopartikel (Al₂O₃-Nanopartikel), Wolframoxidnanopartikel (WO₃-Nanopartikel), Vanadiumoxidnanopartikel (V₂O₅-Nanopartikel) und/oder Eisenoxidnanopartikel (Fe₂O₃-Nanopartikel und/oder Fe₃O₄-Nanopartikel), vorzugsweise TiO₂-Nanopartikel, bevorzugt in kristalliner Form eingesetzt.

Gemäß einer erfindungsgemäß besonders bevorzugten Ausführungsform werden als metalloxidische Nanopartikel Titandioxidnanopartikel, bevorzugt in kristalliner Form, insbesondere in Form von Rutil und/oder Anatas, eingesetzt.

Für die Gewährleistung einer effizienten Katalyse ist es von Vorteil, wenn die eingesetzten metalloxidischen Nanopartikel über ausreichende spezifische Oberflächen verfügen. Erfindungsgemäß geeignete metalloxidische Nanopartikel weisen üblicherweise eine BET-Oberfläche von 1 bis 2.000 m²/g, insbesondere 2 bis 1.500 m²/g, vorzugsweise 5 bis 1.000 m²/g, besonders bevorzugt 10 bis 500 m²/g, auf. Alle im Rahmen der vorliegenden Erfindung genannten bzw. ermittelten BET-Werte werden gemäß ISO 9277 (1995), welche die DIN 66131 ersetzt, bestimmt.

Die Menge an eingesetzten metalloxidischen Nanopartikeln kann in weiten Bereichen variieren.

Üblicherweise werden die metalloxidischen Nanopartikel im Rahmen des erfindungsgemäßen Verfahrens in solchen Mengen eingesetzt, daß der volumenbezogene Gehalt an Metalloxid(en) und/oder metalloxidischen Nanopartikeln im Kohlenstoffsubstrat höchstens 20 Vol.-%, insbesondere höchstens 15 Vol.-%, vorzugsweise höchstens 10 Vol.-%, besonders bevorzugt höchstens 6 Vol.-%, beträgt, bezogen auf das Kohlenstoffsubstrat. Diese Werte sind insbesondere derart ausgelegt, daß ein Kontakt der Nanopartikel untereinander (d. h. also ein Partikel/Partikelkontakt) im Kohlenstoffsubstrat zumindest weitestgehend vermieden werden sollte.

Im allgemeinen werden die metalloxidischen Nanopartikel in solchen Mengen eingesetzt, daß der volumenbezogene Gehalt an Metalloxid(en) bzw. metalloxidischen Nanopartikeln im Kohlenstoffsubstrat 0,01 bis 20 Vol.-%, insbesondere 0,1 bis 15 Vol.-%, vorzugsweise 0,5 bis 10 Vol.-%, besonders bevorzugt 0,5 bis 6 Vol.-%, beträgt, bezogen auf das Kohlenstoffsubstrat.

Was die gewichtsbezogene Menge an eingesetzten metalloxidischen Nanopartikein anbelangt, so kann auch diese in weiten Bereich variieren. Üblicherweise werden die metalloxidischen Nanopartikel in solchen Mengen eingesetzt, daß der massenbezogene Gehalt an Metalloxid(en) bzw. metalloxidischen Nanopartikeln im Kohlenstoffstubstrat 0,1 bis 25 Gew.-%, insbesondere 0,2 bis 20 Gew.-%, vorzugsweise 0,5 bis 15 Gew.-%, beträgt, bezogen auf das Kohlenstoffsubstrat.

Die vorgenannten Untergrenzen erklären sich insbesondere dadurch, daß für eine wirksame Anwendung als Katalysatormaterial überhaupt eine Wirkung erzielt werden muß, wohingegen die Obergrenzen einerseits durch das Bestreben nach einem Vermeiden eines Partikelkontaktes begründet ist und zum anderen seine Ursache darin hat, daß oberhalb gewisser Mengen keine signifikante Steigerung in der katalytischen Wirksamkeit mehr erreicht werden kann.

Vorteilhafterweise werden die metalloxidischen Nanopartikel vor Einbringung in das organische Polymer, insbesondere vor Dispergierung in dem organischen Polymer, einer Oberflächenmodifizierung bzw. Oberflächenfunktionalisierung, vorzugsweise einer Hydrophobierung, unterzogen. Insbesondere kann die Oberflächenmodifizierung bzw. Oberflächenfunktionalisierung durch Alkylsilylgruppenfunktionalisierung, bevorzugt durch Methysilylgruppenfunktionalisierung (z. B. Trimethylsilylgruppenfunktionalisierung), erfolgen. Die Funktionalisierung der Partikeloberfläche der metalloxidischen Nanopartikel, insbesondere zu Zwecken der Hydrophobierung, ist vorteilhaft, um die metalloxidischen Nanopartikel in den Polymeren bzw. den diesbezüglichen Ausgangsmonomeren dispergieren, insbesondere homogen dispergieren, zu können. Zur Funktionalisierung können insbesondere reaktive Silane verwendet werden; besonders bevorzugt sind Chlorsilane und Hexamethyldisilazan, besonders bevorzugt Chlorsilane der allgemeinen Formel SiClₓR₄₋ₓ mit x = 1 bis 3, wobei der Rest R ein organischer Rest, bevorzugt ein Alkylrest, ist, bevorzugt mit der allgemeinen Formel CₙH₍₂ₙ₊₁₎, besonders bevorzugt mit n = 1 bis 6.

Gemäß einer besonders bevorzugten Ausführungsform wird das organische Polymer in situ in Gegenwart der metalloxidischen Nanopartikel erzeugt. Zu diesem Zweck werden die vorzugsweise zuvor oberflächenmodifizierten bzw. oberflächenfunktionalisierten, insbesondere hydrophobierten, metalloxidischen Nanopartikel in den entsprechenden organischen Monomeren bzw. deren Lösungen oder Dispersionen dispergiert, und nachfolgend werden dann die organischen Monomere in Gegenwart der metalloxidischen Nanopartikel zu den betreffenden organischen Polymeren polymerisiert. Es resultiert eine organische Polymermatrix, in welcher die metalloxidischen Nanopartikel eingelagert bzw. eingebettet sind, vorzugsweise in homogener bzw. gleichmäßiger Verteilung, wobei diese Polymermatrix dann nachfolgend carbonisiert bzw. pyrolisiert und gegebenenfalls schließlich aktiviert wird, wie im folgenden noch im Detail beschrieben.

Bei der zuvor geschilderten besonderen Ausführungsform, der zufolge organische Monomere eingesetzt werden, welche nachfolgend in situ in Gegenwart der metalloxidischen Nanopartikel polymerisiert werden, kommen insbesondere solche Monomere zum Einsatz, welche keinen chemisch gebundenen Sauerstoff enthalten; erfindungsgemäß bevorzugte organische Monomere sind insbesondere ausgewählt aus der Gruppe von Vinylchlorid, Styrol, Tetrafluorethylen, Ethylen und/oder Polypropylen, bevorzugt Styrol, besonders bevorzugt Styrol zusammen mit Divinylbenzol (im letztgenannten Fall entsteht nach der Polymerisation divinylbenzolvernetztes Polystyrol, wie nachfolgend noch beschrieben).

Im Rahmen des erfindungsgemäßen Verfahrens werden als organische Polymere, welche die Matrix für die hierin einzulagernden metalloxidischen Nanopartikel bilden, vorteilhafterweise solche organischen Polymere eingesetzt, welche keinen chemisch gebundenen Sauerstoff enthalten. In erfindungsgemäß bevorzugter Weise werden die organischen Polymere, welche die Matrix für die hierin einzulagernden metalloxidischen Nanopartikel bilden, ausgewählt aus der Gruppe von Polyvinylchlorid, Polyacrylnitril, Polystyrol, Polytetrafluorethylen, Polyethylen und/oder Polypropylen, bevorzugt Polystyrol. Besonders bevorzugt ist divinylbenzolvernetztes Polystyrol, insbesondere mit einem Divinylbenzolgehalt von 0,1 bis 20 Gew.-%, vorzugsweise 1 bis 10 Gew.-%, bezogen auf organisches Polymer.

Erfindungsgemäß bevorzugt ist es, wenn die organischen Monomere und/oder die organischen Polymere in sulfonierter Form vorliegen bzw. Sulfonsäuregruppen aufweisen. Üblicherweise erfolgt die Einführung der Sulfonsäuregruppen erst nach Herstellung des Polymers bzw. vor dem Verfahrensschritt der Carbonisierung, und zwar durch Sulfonierung in an sich bekannter Weise. Sulfonsäuregruppen bilden bei der nachfolgenden Carbonisierung freie Radikale, welche zu den für die gute Ausbeute an Kohlenstoff verantwortlichen Vernetzungen im Rahmen des Pyrolysevorgangs führen. Anstelle von Sulfonsäuregruppen können grundsätzlich auch andere chemisch geeignete Gruppen verwendet werden, beispielsweise Isocyanatgruppen.

Was die Einlagerung bzw. Dispergierung der metalloxidischen Nanopartikel in die organischen Monomere bzw. Polymere anbelangt, so kann diese durch dem Fachmann an sich bekannte Maßnahmen erfolgen, beispielsweise durch Rühren, Kneten, Vermahlen mittels Kugelmühlen, Ultraschallbehandlung, Extrudieren etc.

Gemäß einer besonderen Ausführungsform der vorliegenden Erfindung können die die metalloxidischen Nanopartikel enthaltenden Polymere vor dem Verfahrensschritt der Carbonisierung einer Formgebung unterzogen werden. Beispielsweise können die die metalloxidischen Nanopartikel enthaltenden Polymere beispielsweise zu Formkörpern wie Kugeln, Scheiben, Blöcken, komplexeren Strukturen oder dergleichen, weiterverarbeitet werden, welche nachfolgend carbonisiert bzw. pyrolisiert und schließlich gegebenenfalls aktiviert werden, so daß Kohlenstoffspezies mit großer spezifischer Oberfläche (BET) mit hierin eingebetteten metalloxidischen Nanopartikeln entstehen, wie nachfolgend noch geschildert.

Was den Verfahrensschritt der Carbonisierung anbelangt, welcher synonym auch als "Schwelung", "Pyrolyse", "Abbrand" oder dergleichen bezeichnet wird, so erfolgt im Rahmen dieses Verfahrensschrittes die Umwandlung des polymeren Ausgangsmaterials zu Kohlenstoff, d. h. mit anderen Worten wird das polymere kohlenstoffhaltige Ausgangsmaterial verkohlt. Bei der Schwelung bzw. Carbonisierung der zuvor genannten Polymere, welche funktionelle chemische Gruppen, die bei ihrer thermischen Zersetzung zu freien Radikalen und somit zu Vernetzungen führen, insbesondere Sulfonsäuregruppen, enthalten, werden - unter Abspaltung flüchtiger Bestandteile, wie insbesondere SO₂ - die funktionellen chemischen Gruppen, insbesondere Sulfonsäuregruppen, zerstört, und es bilden sich freie Radikale, die eine starke Vernetzung bewirken, ohne die es keinen nennenswerten Pyrolyserückstand (= Kohlenstoff) geben würde.

Im allgemeinen wird die Carbonisierung unter zumindest im wesentlichen inerten Bedingungen, insbesondere unter Ausschluß von Sauerstoff, bevorzugt unter Inertgasatmosphäre, durchgeführt. Auf diese Weise wird ein zu starker Abbrand verhindert.

Erfindungsgemäß wird die Carbonisierung bei Temperaturen im Bereich von 300 bis 1.500 °C, insbesondere 600 bis 1.200 °C, vorzugsweise 700 bis 1.000 °C, durchgeführt, wobei Zeitdauern von 0,1 bis 20 Stunden, vorzugsweise 0,5 bis 10 Stunden, besonders bevorzugt 1 bis 5 Stunden, üblich sind.

An die Carbonisierung schließt sich erfindungsgemäß noch ein Aktivierungsschritt an, welcher letztendlich zur Ausbildung von Aktivkohle in der Matrix und zur Ausbildung von aktiven Zentren in der Matrix führt.

Das Grundprinzip der Aktivierung besteht darin, einen Teil des bei der Carbonisierung generierten Kohlenstoffs selektiv und gezielt unter geeigneten Bedingungen abzubauen. Hierdurch entstehen zahlreiche Poren, Spalten und Risse, und die auf die Masseneinheit bezogene Oberfläche nimmt erheblich zu. Bei der Aktivierung wird also ein gezielter Abbrand der Kohle vorgenommen, insbesondere um weitere Metalloxidoberfläche freizulegen. Da bei der Aktivierung Kohlenstoff abgebaut wird, tritt bei diesem Vorgang ein gewisser Substanzverlust ein, welcher unter optimalen Bedingungen gleichbedeutend mit einer Erhöhung der Porosität und Zunahme der inneren Oberfläche und des Porenvolumens ist. Die Aktivierung erfolgt daher üblicherweise unter selektiv bzw. kontrolliert, oxidierenden Bedingungen. Übliche Aktivierungsgase sind im allgemeinen Sauerstoff, insbesondere in Form von Luft, Wasserdampf und/oder Kohlendioxid sowie Gemische dieser Aktivierungsgase. Da bei Sauerstoff die Gefahr besteht, daß die Einwirkung nicht nur selektiv, sondern an der Gesamtoberfläche erfolgt - wodurch die Kohle mehr oder weniger stark abbrennt-, gibt man Wasserdampf und Kohlendioxid den Vorzug, gegebenenfalls in Mischung mit einem Inertgas (z. B. Stickstoff).

Üblicherweise wird im Rahmen der vorliegenden Erfindung die Aktivierung unter oxidierenden Bedingungen, insbesondere in Gegenwart eines sauerstoffatomhaltigen Gases, bevorzugt ausgewählt aus Sauerstoff, insbesondere in Form von Luft, Kohlendioxid und/oder Wasserdampf, bevorzugt Kohlendioxid und/oder Wasserdampf, gegebenenfalls unter Beimischung mindestens eines Inertgases (z. B. Stickstoff etc.), durchgeführt.

Im allgemeinen wird die Aktivierung bei Temperaturen im Bereich von 500 bis 2.000 °C, insbesondere 600 bis 1.500 °C, vorzugsweise 700 bis 1.200 °C, durchgeführt, wobei insbesondere Zeitdauern von 0,1 bis 20 Stunden, vorzugsweise 0,5 bis 10 Stunden, besonders bevorzugt 1 bis 5 Stunden, üblich sind.

Im Rahmen des erfindungsgemäßen Verfahrens resultiert somit ein katalytisch aktives Material bzw. Katalysatorträgermaterial mit kristallinen metalloxidischen Nanopartikeln in einer porösen Kohlenstoffmatrix (d. h. im Fall der Durchführung des abschließenden Aktivierungsschrittes Aktivkohlematrix). Infolge der Verwendung von Nanopartikeln werden katalytisch große Oberflächen bzw. polare Ankerpunkte bereitgestellt, welche infolge der Porosität des Matrixmaterials auch frei zugänglich sind für die zu katalysierenden Prozesse bzw. für die Anbindung von bzw. Imprägnierung mit katalytisch aktiven Materialien wie (Halb-)Edelmetallen, wie zuvor beschrieben. Überdies verfügen die erfindungsgemäßen Materialien über eine ausgezeichnete mechanische Stabilität, was ihre Verwendung in bzw. als Katalysatormaterialien begünstigt.

Im Rahmen des erfindungsgemäßen Verfahrens wird eine effiziente und dauerhafte Fixierung der metalloxidischen Nanopartikel auf der Trägeroberfläche erreicht, so daß eine Migration der Nanopartikel im Verlauf der Katalyse in effizienter Weise vermieden wird - im Gegensatz zu den aus dem Stand der Technik bekannten Katalysatormaterialien, welche beispielsweise mittels Imprägnierverfahren hergestellte geträgerte Katalysatorsysteme betreffen. Auf diese Weise wird auch verhindert, daß im Zuge der Migration ein unerwünschter Partikelkontakt mit einer daraus resultierenden Reduzierung der zugänglichen Oberfläche stattfindet.

Die erfindungsgemäßen Materialien sind auch in chemischer Hinsicht vollkommen stabil, so daß sie auch für die Katalyse unter extremen Bedingungen (z. B. hohe Temperaturen, aggressive Umgebungsbedingungen, wie z. B. saure oder basische Milieus etc.) geeignet sind.

Infolge der Verwendung von Nanopartikeln mit äußerst geringer Teilchengröße wird zudem die elektrische Leitfähigkeit der Kohlenstoffmatrix nicht bzw. nicht wesentlich beeinflußt.

Gegenstand der vorliegenden Erfindung - gemäß einem **zweiten** Aspekt der vorliegenden Erfindung - ist mit Metalloxiden beladenes Kohlenstoffsubstrat in Form eines metalloxidische Nanopartikel enthaltenden Kohlenstoffmaterials, welches für die Verwendung in oder als Katalysator(en) geeignet ist,
wobei das Kohlenstoffsubstrat in eine poröse Kohlenstoffmatrix auf Basis von Aktivkohle eingelagerte Nanopartikel von Metalloxiden enthält,
wobei das Kohlenstoffsubstrat einen volumenbezogenen Gehalt an metalloxidischen Nanopartikeln im Bereich von 0,01 bis 20 Vol.-%, bezogen auf das Kohlenstoffsubstrat, oder einen massenbezogenen Gehalt an metalloxidischen Nanopartikeln im Kohlenstoffsubstrat im Bereich von 0,1 bis 25 Gew.-%, bezogen auf das Kohlenstoffsubstrat, aufweist und
wobei die metalloxidischen Nanopartikel eine mittlere Partikelgröße im Bereich von 0,5 bis 500 nm aufweisen und kristallin ausgebildet sind.

Somit sind Gegenstand der vorliegenden Erfindung gemäß diesem Erfindungsaspekt die nach dem erfindungsgemäßen Verfahren erhältlichen, mit Metalloxiden beladenen Kohlenstoffsubstrate in Form von metalloxidische Nanopartikel enthaltenden Kohlenstoffmaterialien.

Mit anderen Worten sind Gegenstand der vorliegenden Erfindung nach diesem Erfindungsaspekt mit Metalloxiden beladene Kohlenstoffsubstrate in Form von metalloxidische Nanopartikel enthaltenden Kohlenstoffmaterialien, welche sich vorzugsweise für die Verwendung in oder als Katalysatoren eignen, wobei die erfindungsgemäßen Kohlenstoffsubstrate in eine vorzugsweise poröse Kohlenstoffmatrix eingelagerte Nanopartikel von Metalloxiden umfassen bzw. enthalten.

Für weitergehende Einzelheiten zu diesem Erfindungsaspekt kann Bezug genommen werden auf die vorstehenden Ausführungen zu dem erfindungsgemäßen Verfahren welche in bezug auf das erfindungsgemäße Kohlenstoffsubstrat entsprechend gelten.

Wie zuvor ausgeführt, zeichnen sich die erfindungsgemäßen Kohlenstoffmaterialien durch eine hohe Porosität aus, was eine komplikationsfreie Katalyse bei Verwendung dieser Materialien ermöglicht, da die metalloxidischen Nanopartikel infolge der Porosität gut zugänglich sind.

Insbesondere zeichnen sich die erfindungsgemäßen Kohlenstoffsubstrate durch eine Porosität, bestimmt als Gesamtporenvolumen nach Gurvich, im Bereich von 0,01 bis 4 m³/g, insbesondere 0,1 bis 3,5 m³/g, vorzugsweise 0,2 bis 3 m³/g, besonders bevorzugt 0,3 bis 2,0 m³/g, aus.

Insbesondere ist es von Vorteil, wenn das erfindungsgemäße Kohlenstoffsubstrat eine solche Porosität aufweist, daß mindestens 10 Vol.-%, insbesondere mindestens 15 Vol.-%, vorzugsweise mindestens 20 Vol.-%, des Gesamtvolumens des Kohlenstoffsubstrats durch Poren gebildet sind bzw. porös ausgebildet sind. Bevorzugterweise sind 10 bis 80 Vol.-%, insbesondere 15 bis 75 Vol.-%, vorzugsweise 20 bis 60 Vol.-%, des Gesamtvolumens des Kohlenstoffsubstrats durch Poren gebildet.

Weiterhin zeichnen sich die erfindungsgemäßen Kohlenstoffsubstrate durch eine hohe innere Oberfläche (BET) aus. Insbesondere weisen die erfindungsgemäßen Kohlenstoffmaterialien eine BET-Oberfläche von 100 bis 2.000 m²/g, insbesondere 200 bis 1.750 m²/g, vorzugsweise 300 bis 1.500 m²/g, auf.

Erfindungsgemäß kann der volumenbezogene Gehalt Metalloxid(en) bzw. metalloxidischen Nanopartikeln in dem erfindungsgemäßen Kohlenstoffsubstrat im Bereich von 0,01 bis 20 Vol.-%, insbesondere 0,1 bis 15 Vol.-%, vorzugsweise 0,5 bis 10 Vol.-%, besonders bevorzugt 0,5 bis 6 Vol.-%, bezogen auf das Kohlensubstrat, variieren.

Dabei sollte der volumenbezogene Gehalt an Metalloxid(en) und/oder metalloxidischen Nanopartikeln im Kohlenstoffsubstrat höchstens 20 Vol.- %, insbesondere höchstens 15 Vol.-%, vorzugsweise höchstens 10 Vol.-%, besonders bevorzugt höchstens 6 Vol.-%, bezogen auf das Kohlenstoffsubstrat, betragen.

Weiterhin kann der massenbezogene Gehalt an Metalloxid(en) und/oder metalloxidischen Nanopartikeln im Kohlenstoffubstrat im Bereich von 0,1 bis 25 Gew.-%, insbesondere 0,2 bis 20 Gew.-%, vorzugsweise 0,5 bis 15 Gew.-%, bezogen auf das Kohlenstoffsubstrat, variieren.

Die vorgenannten Untergrenzen sind dadurch bedingt, daß eine gewisse Mindestmenge an metalloxidischen Nanopartikeln zur Erzielung eines katalytischen Effekts vorhanden sein muß, wohingegen die vorgenannten Obergrenzen dadurch bedingt sind, daß ein Kontakt der Nanopartikel untereinander in der Kohlenstoffmatrix zumindest weitestgehend vermieden werden sollte und zudem keine weitergehende Steigerung eines katalytischen Effekts mehr bewirkt wird.

Wie zuvor beschrieben, kann gemäß einer besonderen Ausführungsform das erfindungsgemäße Kohlenstoffsubstrat mit mindestens einer katalytisch aktiven, insbesondere metallischen Komponente versehen und/oder beaufschlagt sind, insbesondere mittels Imprägnierung; insbesondere kann dabei die katalytisch aktive Komponente ausgewählt sein aus mindestens einem Edelmetall oder Halbedelmetall oder dessen Salz, bevorzugt aus der Gruppe von Platin, Palladium, Kupfer, Silber, Gold, Ruthenium, Rhodium, Iridium und/oder Osmium sowie deren Kombinationen und jeweiligen Salzen.

Weiterhin betrifft die vorliegende Erfindung - gemäß einem **dritten** Erfindungsaspekt- die Verwendung des erfindungsgemäßen Kohlenstoffsubstrats als Katalysator oder in der Herstellung von Katalysatoren (z. B. als Katalysatorträgermaterial).

Die erfindungsgemäßen Kohlenstoffsubstrate eignen sich für katalytische Prozesse beliebiger Art, beispielsweise zur Behandlung von Abgasen aller Art (z. B. Abgase bzw. Rauchgase aus Kraftwerken, Abgase aus Verbrennungsmotoren, wie z. B. Automobilen, oder dergleichen).

Weiterhin kann die Verwendung der betreffenden Katalysatoren in Brennstoffzellen genannt werden.

Speziell im Fall der Verwendung von TiO₂-Nanopartikein kann das erfindungsgemäße Kohlenstoffsubstrat als Katalysator bzw. für die Herstellung von Katalysatoren für die Photokatalyse bzw. für photokatalytische Prozesse eingesetzt werden.

Wie zuvor beschrieben, kommt - neben der Verwendung als Katalysator selbst-aber auch die Verwendung des erfindungsgemäßen Kohlenstoffsubstrats nur als Bestandteil eines Katalysators in Betracht, wobei das erfindungsgemäße, mit Metalloxiden beladene Kohlenstoffsubstrat entweder katalytisch aktive Komponente oder aber Trägermaterial für den Katalysator sein kann. Insbesondere kann das erfindungsgemäße, mit Metalloxiden beladene Kohlenstoffsubstrat als Trägermaterial für einen Katalysator eingesetzt wird, wobei bei dieser Ausführungsform - wie zuvor beschrieben - das erfindungsgemäße Kohlenstoffmaterial mit mindestens einer katalytisch aktiven, insbesondere metallischen Komponente (vorzugsweise ausgewählt aus mindestens einem Edelmetall oder Halbedelmetall oder dessen Salz, bevorzugt aus der Gruppe von Platin, Palladium, Kupfer, Silber, Gold, Ruthenium, Rhodium, Iridium und/oder Osmium sowie deren Kombinationen und Salzen) versehen bzw. beaufschlagt, insbesondere hiermit imprägniert sein kann.

Wiederum weiterer Gegenstand der vorliegenden Erfindung -gemäß einem **vierten** Aspekt der vorliegenden Erfindung - ist ein Katalysator, welcher das zuvor beschriebene Kohlenstoffsubstrat nach der vorliegenden Erfindung enthält bzw. unter Verwendung des zuvor beschriebenen Kohlenstoffsubstrats nach der vorliegenden Erfindung hergestellt ist.

Gemäß einer besonderen Ausführungsform kann dabei das Kohlenstoffsubstrat mit mindestens einer katalytisch aktiven, insbesondere metallischen Komponente versehen und/oder beaufschlagt sein, insbesondere mittels Imprägnierung. Insbesondere kann dabei die katalytisch aktive Komponente ausgewählt sein aus mindestens einem Edelmetall oder Halbedelmetall oder dessen Salz, bevorzugt aus der Gruppe von Platin, Palladium, Kupfer, Silber, Gold, Ruthenium, Rhodium, Iridium und/oder Osmium sowie deren Kombinationen und jeweiligen Salzen.

Für weitergehende Einzelheiten zu diesem Erfindungsaspekt kann auch auf die Ausführungen zu dem dritten Erfindungsaspekt verwiesen werden, welche diesbezüglich entsprechend gelten.

Des weiteren ist Gegenstand der vorliegenden Erfindung - gemäß einem **fünften** Aspekt der vorliegenden Erfindung - die Verwendung des erfindungsgemäßen Kohlenstoffsubstrats als Bipolarplatte oder in der Herstellung von Bipolarplatten.

Schließlich ist weiterer Gegenstand der vorliegenden Erfindung - gemäß einen **sechsten** Aspekt der vorliegenden Erfindung - eine Bipolarplatte, welche das zuvor beschriebene Kohlenstoffsubstrat nach der vorliegenden Erfindung enthält bzw. unter Verwendung des zuvor beschriebenen Kohlenstoffsubstrats nach der vorliegenden Erfindung hergestellt ist.

Für weitergehende Einzelheiten zu den übrigen Erfindungsaspekten der vorliegenden Erfindung kann zur Vermeidung unnötiger Wiederholungen auf die vorstehenden Ausführungen zu dem ersten Erfindungsaspekt und vice versa verwiesen werden, welche in bezug auf die übrigen Erfindungsaspekte entsprechend gelten.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Das nachfolgende Ausführungsbeispiel dient lediglich zur Veranschaulichung der vorliegenden Erfindung, ohne die vorliegende Erfindung jedoch hierauf zu beschränken.

### AUSFÜHRUNGSBEISPIEL:

### Herstellung erfindungsgemäßer Kohlenstoffmaterialien mit hierin eingelagerten Titandioxidnanopartikeln oder anderen Metalloxidnanopartikeln

20 g TiO₂-Pulver mit einer spezifischen Oberfläche von 100 m²/g werden unter starkem Rühren und mit Hilfe eines Ultraschall-Erzeugers in einem Rundkolben in einer Mischung aus 200 ml Toluol und 20 ml Pyridin dispergiert und langsam mit einer Mischung aus 200 ml Toluol und 100 ml Chlortrimethylsilan versetzt. Die Suspension wird 1 Stunde unter Stickstoff-Spülung gerührt und die überschüssigen organischen Bestandteile im Vakuum abdestilliert. 10 g des so funktionalisierten Titandioxid-Pulvers werden in 100 ml Styrol mit Hilfe eines Ultraschall-Erzeugers dispergiert, und der Dispersion werden nacheinander 5 g Divinylbenzol und 5 g Dibenzoylperoxid zugegeben. Die Suspension wird unter Rühren in einem siedenden Wasserbad für 40 Minuten erwärmt, in eine Form gegossen und abgekühlt. 100 g des entstandenen Feststoffs werden anschließend zerkleinert und in einem Rundkolben mit 200 ml konzentrierter Schwefelsäure versetzt. Die Suspension wird unter starkem Rühren für 30 Minuten auf 160 °C erhitzt, abgekühlt und filtriert. Der Filterrückstand wird in einen Drehrohrofen überführt und unter Stickstoff für 3 Stunden bei 750 °C pyrolysiert. Danach wird dem Stickstoff-Gasstrom 30 Vol.-% Wasserdampf zugesetzt und das Pulver für weitere 60 Minuten bei 800 °C aktiviert. Es resultiert ein erfindungsgemäßes Kohlenstoffmaterial mit hierin eingelagerten Titandioxidnanopartikeln, welches sich als Katalysatormaterial (z. B. für die Photokatalyse) oder aber als Trägermaterial für Katalysatoren eignet. Für den Fall, daß das auf diese Weise hergestellte erfindungsgemäßes Kohlenstoffmaterial als Trägermaterial für einen Katalysator eingesetzt werden soll, kann sich noch eine Imprägnierungsbehandlung mit einem geeigneten (Halb-)Edelmetall (z. B. auf der Basis von Pt, Cu, Ag, Rh etc.) bzw. dessen Salz anschließen.

In analoger Verfahrensweise werden auch andere Metalloxidnanopartikel eingelagert (z. B. SiO₂, WO₃, V₂O₅, Fe₂O₃, Fe₃O₄ etc.).

## Patentansprüche

1. Verfahren zur Herstellung eines mit Metalloxiden beladenen Kohlenstoffsubstrats in Form eines metalloxidische Nanopartikel enthaltenden Kohlenstoffmaterials, vorzugsweise für die Verwendung in oder als Katalysator(en),
**dadurch gekennzeichnet,**
**daß** in einem ersten Verfahrensschritt Nanopartikel von Metalloxiden in eine Matrix auf Basis mindestens eines organischen Polymers eingebracht werden, insbesondere hierin dispergiert werden, und
**daß** nachfolgend in einem zweiten Verfahrensschritt die die Nanopartikel enthaltende Polymermatrix zu Kohlenstoff carbonisiert wird, gefolgt von einem dritten Verfahrensschritt der Aktivierung, wobei die Carbonisierung unter zumindest im wesentlichen inerten Bedingungen und bei Temperaturen im Bereich von 300 bis 1.500 °C für eine Zeitdauer von 0,1 bis 20 Stunden durchgeführt wird und wobei die Aktivierung unter oxidierenden Bedingungen bei Temperaturen im Bereich von 500 bis 2.000 °C für eine Zeitdauer von 0,1 bis 20 Stunden durchgeführt wird,
so daß ein poröses Kohlenstoffsubstrat auf Basis von Aktivkohle mit hierin eingelagerten metalloxidischen Nanopartikeln resultiert, wobei die metalloxidischen Nanopartikel in solchen Mengen eingesetzt werden, daß der volumenbezogene Gehalt an metalloxidischen Nanopartikeln im Kohlenstoffsubstrat 0,01 bis 20 Vol.-% beträgt, bezogen auf das Kohlenstoffsubstrat, oder daß der massenbezogene Gehalt an metalloxidischen Nanopartikeln im Kohlenstoffsubstrat 0,1 bis 25 Gew.-% beträgt, bezogen auf das Kohlenstoffsubstrat, und wobei die metalloxidischen Nanopartikel eine mittlere Partikelgröße im Bereich von 0,5 bis 500 nm aufweisen und kristallin ausgebildet sind.

2. Verfahren nach Anspruch 1, **dadurch gekennzeichnet, daß** die metalloxidischen Nanopartikel mit einer Kristallinität von mindestens 70 %, insbesondere mindestens 80 %, vorzugsweise mindestens 90 %, besonders bevorzugt mindestens 95 %, ausgebildet sind, und ganz besonders bevorzugt vollständig kristallin sind.

3. Verfahren nach einem der vorangehenden Ansprüche, **dadurch gekennzeichnet, daß** die metalloxidischen Nanopartikel ausgewählt sind aus Nanopartikeln von katalytisch aktiven Metalloxiden, insbesondere Metalloxiden der Übergangsmetalle des Periodensystems der Elemente sowie deren Mischungen und Legierungen, bevorzugt aus der Gruppe von Titandioxid, Siliziumdioxid, Aluminiumoxid, Wolframoxid, Vanadiumoxid und Eisenoxiden sowie deren Mischungen und Legierungen.

4. Verfahren nach einem der vorangehenden Ansprüche, **dadurch gekennzeichnet, daß** die metalloxidischen Nanopartikel in solchen Mengen eingesetzt werden, daß der volumenbezogene Gehalt an metalloxidischen Nanopartikeln im Kohlenstoffsubstrat 0,1 bis 15 Vol.-%, vorzugsweise 0,5 bis 10 Vol.-%, besonders bevorzugt 0,5 bis 6 Vol.-%, beträgt, bezogen auf das Kohlenstoffsubstrat.

5. Verfahren nach einem der vorangehenden Ansprüche, **dadurch gekennzeichnet, daß** die metalloxidischen Nanopartikel vor Einbringung, insbesondere vor Dispergierung, in dem organischen Polymer einer Oberflächenmodifizierung oder Oberflächenfunktionalisierung, vorzugsweise einer Hydrophobierung, insbesondere durch Alkylsilylgruppenfunktionalisierung, bevorzugt durch Methylsilylgruppenfunktionalisierung, unterzogen werden.

6. Verfahren nach einem der vorangehenden Ansprüche, **dadurch gekennzeichnet, daß** das organische Polymer in situ in Gegenwart der metalloxidischen Nanopartikel erzeugt wird, insbesondere wobei die vorzugsweise zuvor oberflächenmodifizierten oder oberflächenfunktionalisierten, insbesondere hydrophobierten metalloxidischen Nanopartikel in den entsprechenden organischen Monomeren oder deren Lösungen oder Dispersionen dispergiert werden und nachfolgend die organischen Monomere in Gegenwart der metalloxidischen Nanopartikel polymerisiert werden, insbesondere wobei organische Monomere eingesetzt werden, welche keinen chemisch gebundenen Sauerstoff enthalten.

7. Verfahren nach einem der vorangehenden Ansprüche, **dadurch gekennzeichnet, daß** organische Polymere eingesetzt werden, welche keinen chemisch gebundenen Sauerstoff enthalten, ausgewählt aus der Gruppe von Polyvinylchlorid, Polyacrylnitril, Polystyrol, Polytetrafluorethylen, Polyethylen und Polypropylen, bevorzugt Polystyrol, besonders bevorzugt divinylbenzolvernetztem Polystyrol, insbesondere mit einem Divinlybenzolgehalt von 0,1 bis 20 Grw.-%, vorzugsweise 1 bis 10 Gew.-%, bezogen auf organisches Polymer.

8. Verfahren nach einem der vorangehenden Ansprüche, **dadurch gekennzeichnet, daß** die Carbonisierung unter Ausschluß von Sauerstoff, bevorzugt unter Inertgasatmosphäre, durchgeführt wird oder daß die Carbonisierung bei Temperaturen im Bereich von 600 bis 1.200 °C, vorzugsweise 700 bis 1.000 °C, durchgeführt wird, insbesondere für eine Zeitdauer von 0,5 bis 10 Stunden, besonders bevorzugt 1 bis 5 Stunden; und
daß die Aktivierung in Gegenwart eines sauerstoffatomhaltigen Gases, bevorzugt ausgewählt aus Sauerstoff, insbesondere in Form von Luft, Kohlendioxid oder Wasserdampf, bevorzugt Kohlendioxid oder Wasserdampf, gegebenenfalls unter Beimischung mindestens eines Inertgases, durchgeführt wird oder daß die Aktivierung bei Temperaturen im Bereich von 600 bis 1.500 °C, vorzugsweise 700 bis 1.200 °C, durchgeführt wird, insbesondere für eine Zeitdauer von 0,5 bis 10 Stunden, besonders bevorzugt 1 bis 5 Stunden.

9. Verfahren nach einem der vorangehenden Ansprüche, **dadurch gekennzeichnet, daß** das carbonisierte und gegebenenfalls aktivierte Kohlenstoffmaterial mit mindestens einer katalytisch aktiven, insbesondere metallischen Komponente versehen wird, insbesondere mittels Imprägnierung, insbesondere wobei die katalytisch aktive Komponente ausgewählt wird aus mindestens einem Edelmetall oder Halbedelmetall oder dessen Salz, bevorzugt aus der Gruppe von Platin, Palladium, Kupfer, Silber, Gold, Ruthenium, Rhodium, Iridium und Osmium sowie deren Kombinationen und jeweiligen Salzen.

10. Mit Metalloxiden beladenes Kohlenstoffsubstrat in Form eines metalloxidischen Nanopartikel enthaltenden Kohlenstoffmaterials, vorzugsweise für die Verwendung in oder als Katalysator(en),
**dadurch gekennzeichnet,**
**daß** das Kohlenstoffsubstrat in eine poröse Kohlenstoffmatrix auf Basis von Aktivkohle eingelagerte Nanopartikel von Metalloxiden enthält,
**daß** das Kohlenstoffsubstrat einen volumenbezogenen Gehalt an metalloxidischen Nanopartikeln im Bereich von 0,01 bis 20 Vol.-%, bezogen auf das Kohlenstoffsubstrat, oder einen massenbezogenen Gehalt an metalloxidischen Nanopartikeln im Kohlenstoffsubstrat im Bereich von 0,1 bis 25 Gew.-%, bezogen auf das Kohlenstoffsubstrat, aufweist und
**daß** die metalloxidischen Nanopartikel eine mittlere Partikelgröße im Bereich von 0,5 bis 500 nm aufweisen und kristallin ausgebildet sind.

11. Kohlenstoffsubstrat nach Anspruch 10, erhältlich nach einem Verfahren gemäß einem der Ansprüche 1 bis 9.

12. Kohlenstoffsubstrat nach Anspruch 10 oder 11, **gekennzeichnet durch** eine Porosität, bestimmt als Gesamtporenvolumen nach Gurvich, im Bereich von 0,01 bis 4 cm³/g, insbesondere 0,1 bis 3,5 cm³/g, vorzugsweise 0,2 bis 3 cm³/g, besonders bevorzugt 0,3 bis 2,0 cm³/g.

13. Kohlenstoffsubstrat nach einem der Ansprüche 10 bis 12, **gekennzeichnet durch** eine BET-Oberfläche von 100 bis 2.000 m²/g, insbesondere 200 bis 1.750 m²/g, vorzugsweise 300 bis 1.500 m²/g, und **gekennzeichnet durch** einen volumenbezogenen Gehalt an Metalloxid(en) oder metalloxidischen Nanopartikeln im Kohlenstoffsubstrat von höchstens 20 Vol.-%, insbesondere höchstens 15 Vol.-%, vorzugsweise höchstens 10 Vol.-%, besonders bevorzugt höchstens 6 Vol.-%, bezogen auf das Kohlenstoffsubstrat.

14. Kohlenstoffsubstrat nach einem der Ansprüche 10 bis 13, **gekennzeichnet durch** einen volumenbezogenen Gehalt an metalloxidischen Nanopartikeln im Kohlenstoffsubstrat im Bereich von 0,1 bis 15 Vol.-%, vorzugsweise 0,5 bis 10 Vol.-%, besonders bevorzugt 0,5 bis 6 Vol.-%, bezogen auf das Kohlenstoffsubstrat.

15. Kohlenstoffsubstrat nach einem der Ansprüche 10 bis 14, **gekennzeichnet durch** einen massenbezogenen Gehalt an metalloxidischen Nanopartikeln im Kohlenstoffsubstrat im Bereich von 0,2 bis 20 Gew.-%, vorzugsweise 0,5 bis 15 Gew.-%, bezogen auf das Kohlenstoffsubstrat.

16. Kohlenstoffsubstrat nach einem der Ansprüche 10 bis 15, **dadurch gekennzeichnet, daß** das Kohlenstoffsubstrat mit mindestens einer katalytisch aktiven, insbesondere metallischen Komponente versehen ist, insbesondere mittels Imprägnierung, insbesondere wobei die katalytisch aktive Komponente ausgewählt ist aus mindestens einem Edelmetall oder Halbedelmetall oder dessen Salz, bevorzugt aus der Gruppe von Platin, Palladium, Kupfer, Silber, Gold, Ruthenium, Rhodium, Iridium und Osmium sowie deren Kombinationen und jeweiligen Salzen.

17. Verwendung eines Kohlenstoffsubstrats nach einem der Ansprüche 10 bis 16 als Katalysator oder in der Herstellung von Katalysatoren, insbesondere als Trägermaterial für Katalysatoren.

18. Katalysator, enthaltend ein Kohlenstoffsubstrat nach einem der Ansprüche 10 bis 16.

19. Katalysator nach Anspruch 18, wobei das Kohlenstoffsubstrat mit mindestens einer katalytisch aktiven, insbesondere metallischen Komponente versehen ist, insbesondere mittels Imprägnierung, insbesondere wobei die katalytisch aktive Komponente ausgewählt ist aus mindestens einem Edelmetall oder Halbedelmetall oder dessen Salz, bevorzugt aus der Gruppe von Platin, Palladium, Kupfer, Silber, Gold, Ruthenium, Rhodium, Iridium und Osmium sowie deren Kombinationen und jeweiligen Salzen.

20. Verwendung eines Kohlenstoffsubstrats nach einem der Ansprüche 10 bis 16 als Bipolarplatte oder in der Herstellung von Bipolarplatten.

21. Bipolarplatte, enthaltend ein Kohlenstoffsubstrat nach einem der Ansprüche 10 bis 16.

## Claims

1. A method for the production of a carbon substrate loaded with metal oxides, in the form of a carbon material containing metal oxide nanoparticles, preferably for use in or as catalyst(s),
**characterized in that**
in a first process step nanoparticles of metal oxides are incorporated, in particular dispersed, into a matrix based on at least one organic polymer, and
subsequently, in a second process step, the polymer matrix containing the nanoparticles is carbonized into carbon, followed by a third process step of activation, wherein carbonization is being performed under at least essentially inert conditions and at temperatures in the range of 300 to 1,500°C for a period of 0.1 to 20 hours, and wherein activation is being performed under oxidizing conditions at temperatures in the range of 500 to 2,000°C for a period of 0.1 to 20 hours,
such that the result is a porous carbon substrate based on activated carbon, having metal oxidic nanoparticles embedded therein, wherein the metal oxidic nanoparticles are used in such amounts that the volume-related content of metal oxidic nanoparticles in the carbon substrate is 0.01 to 20% by volume, based on the carbon substrate, or that the mass-related content of metal oxidic nanoparticles in the carbon substrate is 0.1 to 25% by weight, based on the carbon substrate, and wherein the metal oxidic nanoparticles have a mean particle size in the range of 0.5 to 500 nm, and are embodied in a crystalline manner.

2. The method according to claim 1, **characterized in that** the metal oxidic nanoparticles are embodied as having a crystallinity of at least 70%, in particular at least 80%, preferably at least 90%, particularly preferred at least 95%, and are especially preferred completely amorphous.

3. The method according to one of the previous claims, **characterized in that** the metal oxidic nanoparticles are selected from nanoparticles of catalytically active metal oxides, in particular metal oxides of the transition metals of the periodic table of the elements, as well as the mixtures and alloys thereof, preferably from the group of titania, silica, alumina, tungsten oxide, vanadium oxide, and iron oxides, as well as the mixtures and alloys thereof.

4. The method according to one of the previous claims, **characterized in that** the metal oxide nanoparticles are utilized in such amounts that the volume-related content of metal oxidic nanoparticles in the carbon substrate is 0.1 to 15% by volume, preferably 0.5 to 10% by volume, particularly preferred 0.5 to 6% by volume, based on the carbon substrate.

5. The method according to one of the previous claims, **characterized in that** before their incorporation, in particular dispersion, into the organic polymer, the metal oxidic nanoparticles are subjected to a surface modification or surface functionalization, preferably hydrophobizing, in particular by means of alkyl silyl group functionalization, preferably by means of methyl silyl group functionalizing.

6. The method according to one of the previous claims, **characterized in that** the organic polymer is created in situ in the presence of the metal oxidic nanoparticles, in particular, wherein the preferably initially surface-modified or surface-functionalized, in particular hydrophobized metal oxidic nanoparticles are dispersed in the corresponding organic monomers, or the solutions or dispersions thereof, and subsequently the organic monomers are polymerized in the presence of the metal oxidic nanoparticles, in particular, wherein organic monomers are used, which do not contain any chemically bound oxygen.

7. The method according to one of the previous claims, **characterized in that** organic polymers are used, which do not contain any chemically bound oxygen, selected from the group of polyvinyl chloride, polyacryl nitrile, polystyrene, polytetrafluoroethyelene, polyethylene, and polypropylene, preferably polystyrene, particularly preferred divinyl benzole-crosslinked polystyrene, in particular having a divinyl benzole content of 0.1 to 20% by weight, preferably 1 to 10% by weight, based on organic polymer.

8. The method according to one of the previous claims, **characterized in that** the carbonization is performed excluding oxygen, preferably under inert gas atmosphere, or that the carbonization is performed at temperatures in the range of 600 to 1,200°C, preferably 700 to 1,000°C, in particular for a period of 0.5 to 10 hours, particularly preferred 1 to 5 hours; and
the activation is performed in the presence of an oxygen atom containing gas, preferably selected from oxygen, in particular in the form of air, carbon dioxide, or water vapor, preferably carbon dioxide or water vapor, optionally under admixture of at least one inert gas, or that the activation is performed at temperatures in the range of 600 to 1,500°C, preferably 700 to 1,200°C, in particular for a period of 0.5 to 10 hours, particularly preferred 1 to 5 hours.

9. The method according to one of the previous claims, **characterized in that** the carbonized and optionally activated carbon material is equipped with at least one catalytically active, in particular metal component, in particular by means of impregnation, in particular wherein the catalytically active component is selected from at least one precious metal or semiprecious metal, or the salt thereof, preferably from the group of platinum, palladium, copper, silver, gold, ruthenium, rhodium, iridium, and osmium, as well as the combinations and respective salts thereof.

10. A carbon substrate loaded with metal oxides, in the form of a carbon material containing metal oxidic nanoparticles, preferably for use in or as catalyst(s),
**characterized in that**
the carbon substrate contains nanoparticles of metal oxides embedded in a porous carbon matrix based on activated carbon,
the carbon substrate has a volume-related content of metal oxidic nanoparticles in the range of 0.01 to 20% by volume, based on the carbon substrate, or a mass-related content of metal oxidic nanoparticles in the carbon substrate in the range of 0.1 to 25% by weight, based on the carbon substrate, and
the metal oxidic nanoparticles have a mean particle size in the range of 0.5 to 500 nm, and are embodied in an amorphous manner.

11. A carbon substrate according to claim 10, obtainable according to a method according to one of the claims 1 to 9.

12. The carbon substrate according to claims 10 or 11, **characterized by** means of a porosity, determined as the overall pore volume according to Gurvich, in the range of 0.01 to 4 cm³/g, in particular 0.1 to 3.5 cm³/g, preferably 0.2 to 3 cm³/g, particularly preferred 0.3 to 2.0 cm³/g.

13. The carbon substrate according to one of the claims 10 to 12, **characterized by** means of a BET surface of 100 to 2,000 m²/g, in particular 200 to 1,750 m²/g, preferably 300 to 1,500 m²/g, and **characterized by** means of a volume-related content of metal oxide(s), or metal oxidic nanoparticles in the carbon substrate of not more than 20% by volume, in particularly of not more than 15% by volume, preferably of not more than 10% by volume, particularly preferred of not more than 6% by volume, based on the carbon substrate.

14. The carbon substrate according to one of the claims 10 to 13, **characterized by** means of a volume-related content of metal oxidic nanoparticles in the carbon substrate in the range of 0.1 to 15% by volume, preferably 0.5 to 10% by volume, particularly preferred 0.5 to 6% by volume, based on the carbon substrate.

15. The carbon substrate according to one of the claims 10 to 14, **characterized by** means of a mass-related content of metal oxidic nanoparticles in the carbon substrate in the range of 0.2 to 20% by weight, preferably 0.5 to 15% by weight, based on the carbon substrate.

16. The carbon substrate according to one of the claims 10 to 15, **characterized in that** the carbon substrate is equipped with at least one catalytically active, in particular metal component, in particular by means of impregnation, in particular, wherein the catalytically active component is selected from at least one precious metal or semiprecious metal, or the salt thereof, preferably from the group of platinum, palladium, copper, silver, gold, ruthenium, rhodium, iridium, and osmium, as well as the combinations and respective salts thereof.

17. A use of a carbon substrate according to one of the claims 10 to 16 as a catalyst, or in the production of catalysts, in particular as carrier material for catalysts.

18. A catalyst, comprising a carbon substrate according to one of the claims 10 to 16.

19. The catalyst according to claim 18, wherein the carbon substrate is equipped with at least one catalytically active, in particular metal component, in particular by means of impregnation, in particular, wherein the catalytically active component is selected from at least one precious metal or semiprecious metal, or the salt thereof, preferably from the group of platinum, palladium, copper, silver, gold, ruthenium, rhodium, iridium, and osmium, as well as the combinations and respective salts thereof.

20. The use of a carbon substrate according to one of the claims 10 to 16 as a bipolar plate, or in the production of bipolar plates.

21. A bipolar plate, comprising a carbon substrate according to one of the claims 10 to 16.

## Revendications

1. Procédé de fabrication d'un substrat carboné chargé d'oxydes métalliques sous forme d'un matériau carboné contenant des nanoparticules d'oxydes métalliques, de préférence pour une utilisation dans ou en tant qu'un ou plusieurs catalyseurs, **caractérisé en ce que**
dans une première étape du procédé, des nanoparticules d'oxydes métalliques sont incorporées dans une matrice à base d'au moins un polymère organique, en particulier y sont dispersées, et
ensuite, dans une deuxième étape du procédé, la matrice polymère contenant les nanoparticules est carbonisée pour donner du carbone, l'opération étant suivie d'une troisième étape, d'activation, la carbonisation étant mise en oeuvre dans des conditions au moins essentiellement inertes et à des températures comprises dans la plage de 300 à 1500°C pendant un laps de temps de 0,1 à 20 heures, et l'activation étant mise en oeuvre dans des conditions oxydantes à des températures comprises dans la plage de 500 à 2000°C pendant un laps de temps de 0,1 à 20 heures,
de façon qu'il en résulte un substrat carboné poreux à base de charbon actif dans lequel sont incorporées des nanoparticules d'oxydes métalliques, les nanoparticules d'oxydes métalliques étant utilisées en des quantités telles que la teneur en volume du substrat carboné en nanoparticules d'oxydes métalliques soit de 0,01 à 20 % en volume par rapport au substrat carboné, ou que la teneur en masse du substrat carboné en nanoparticules d'oxydes métalliques soit de 0,1 à 25 % en poids par rapport au substrat carboné, et les nanoparticules d'oxydes métalliques présentant une granulométrie moyenne comprise dans la plage de 0,5 à 500 nm et ayant une configuration cristalline.

2. Procédé selon la revendication 1, **caractérisé en ce que** les nanoparticules d'oxydes métalliques sont configurées avec une cristallinité d'au moins 70 %, en particulier d'au moins 80 %, de préférence d'au moins 90 %, d'une manière particulièrement préférée d'au moins 95 %, et d'une manière tout particulièrement préférée sont entièrement cristallines.

3. Procédé selon l'une des revendications précédentes, **caractérisé en ce que** les nanoparticules d'oxydes métalliques sont choisies parmi les nanoparticules d'oxydes métalliques catalytiquement actifs, en particulier d'oxydes métalliques des métaux de transition du Tableau Périodique des Eléments, ainsi que de leurs mélanges et alliages, de préférence dans le groupe du dioxyde de titane, du dioxyde de silicium, de l'oxyde d'aluminium, de l'oxyde de tungstène, de l'oxyde de vanadium et des oxydes de fer, ainsi que de leurs mélanges et alliages.

4. Procédé selon l'une des revendications précédentes, **caractérisé en ce que** des nanoparticules d'oxydes métalliques sont utilisées en des quantités telles que la teneur en volume du substrat carboné en nanoparticules d'oxydes métalliques soit de 0,1 à 15 % en volume, de préférence de 0,5 à 10 % en volume, d'une manière particulièrement préférée de 0,5 à 6 % en volume, par rapport au substrat carboné.

5. Procédé selon l'une des revendications précédentes, **caractérisé en ce que** les nanoparticules d'oxydes métalliques sont, avant leur incorporation, en particulier avant leur dispersion, dans le polymère organique, soumises à une modification en surface ou à une fonctionnalisation en surface, de préférence à une hydrophobisation, en particulier par fonctionnalisation par des groupes alkylsilyle, de préférence par fonctionnalisation par des groupes méthylsilyle.

6. Procédé selon l'une des revendications précédentes, **caractérisé en ce que** le polymère organique est produit in situ en présence des nanoparticules d'oxydes métalliques, en particulier dans lequel les nanoparticules d'oxydes métalliques, de préférence au préalable modifiées en surface ou fonctionnalisées en surface, en particulier hydrophobisées, sont dispersées dans les monomères organiques correspondants ou dans les solutions ou dispersions de ces derniers, puis les monomères organiques sont polymérisés en présence des nanoparticules d'oxydes métalliques, en particulier dans lequel des monomères organiques sont utilisés, qui ne contiennent pas d'oxygène chimiquement lié.

7. Procédé selon l'une des revendications précédentes, **caractérisé en ce qu'**on utilise des polymères organiques qui ne contiennent aucun oxygène chimiquement lié, choisis dans le groupe du poly(chlorure de vinyle), du polyacrylonitrile, du polystyrène, du polytétrafluoréthylène, du polyéthylène et du polypropylène, de préférence du polystyrène, d'une manière particulièrement préférée du polystyrène réticulé par du divinylbenzène, ayant en particulier une teneur en divinylbenzène de 0,1 à 20 %, en particulier de 1 à 10 %, par rapport au polymère organique.

8. Procédé selon l'une des revendications précédentes, **caractérisé en ce que** la carbonisation est mise en oeuvre à l'abri de l'oxygène, de préférence sous gaz inerte, ou que la carbonisation est mise en oeuvre à des températures comprises dans la plage de 600 à 1200°C, de préférence de 700 à 1000°C, en particulier pendant un laps de temps de 0,5 à 10 heures, d'une manière particulièrement préférée de 1 à 5 heures ; et que
l'activation est mise en oeuvre en présence d'un gaz contenant un ou des atomes d'oxygène, de préférence choisi parmi l'oxygène, en particulier sous forme d'air, le dioxyde de carbone ou la vapeur d'eau, de préférence le dioxyde de carbone ou la vapeur d'eau, éventuellement en mélange avec au moins un gaz inerte, ou que l'activation est mise en oeuvre à des températures comprises dans la plage de 600 à 1500°C, de préférence de 700 à 1200°C, en particulier pendant un laps de temps de 0,5 à 10 heures, d'une manière particulièrement préférée de 1 à 5 heures.

9. Procédé selon l'une des revendications précédentes, **caractérisé en ce que** le matériau carboné, et éventuellement activé, est pourvu d'au moins un composant catalytiquement actif, en particulier métallique, en particulier par imprégnation, en particulier dans lequel le composant catalytiquement actif est choisi parmi au moins un métal précieux ou un métal semi-précieux ou l'un de ses sels, de préférence dans le groupe du platine, du palladium, du cuivre, de l'argent, de l'or, du ruthénium, du rhodium, de l'iridium et de l'osmium, ainsi que de leurs combinaisons et des sels correspondants.

10. Substrat carboné chargé d'oxydes métalliques sous forme d'un matériau carboné contenant des nanoparticules d'oxydes métalliques, de préférence pour une utilisation dans ou en tant qu'un ou plusieurs catalyseurs, **caractérisé en ce que**
le substrat carboné contient des nanoparticules d'oxydes métalliques incorporées dans une matrice carbonée poreuse à base de charbon actif,
le substrat carboné présente une teneur en volume en nanoparticules d'oxydes métalliques comprise dans la plage de 0,01 à 20 % en volume, par rapport au substrat carboné, ou une teneur en masse du substrat carboné en nanoparticules d'oxydes métalliques comprise dans la plage de 0,1 à 25 % en poids par rapport au substrat carboné, et
les nanoparticules d'oxydes métalliques présentent une granulométrie moyenne comprise dans la plage de 0,5 à 500 nm et ont une configuration cristalline.

11. Substrat carboné selon la revendication 10, pouvant être obtenu par un procédé selon l'une des revendications 1 à 9.

12. Substrat carboné selon la revendication 10 ou 11, **caractérisé par** une porosité, déterminée par le volume total des pores selon Gurvich, comprise dans la plage de 0,01 à 4 cm³/g, en particulier de 0,1 à 3,5 cm³/g, de préférence de 0,2 à 3 cm³/g, d'une manière particulièrement préférée de 0,3 à 2,0 cm³/g.

13. Substrat carboné selon l'une des revendications 10 à 12, **caractérisé par** une aire BET de 100 à 2000 m²/g, en particulier de 200 à 1750 m²/g, de préférence de 300 à 1500 m²/g, et **caractérisé par** une teneur en volume du substrat carboné en un ou plusieurs oxydes métalliques ou en nanoparticules d'oxydes métalliques d'au plus 20 % en volume, en particulier d'au plus 15 % en volume, de préférence d'au plus 10 % en volume, d'une manière particulièrement préférée d'au plus 6 % en volume, par rapport au substrat carboné.

14. Substrat carboné selon l'une des revendications 10 à 13, **caractérisé par** une teneur en volume du substrat carboné en nanoparticules d'oxydes métalliques comprise dans la plage de 0,1 à 15 % en volume, de préférence de 0,5 à 10 % en volume, d'une manière particulièrement préférée de 0,5 à 6 % en volume, par rapport au substrat carboné.

15. Substrat carboné selon l'une des revendications 10 à 14, **caractérisé par** une teneur en masse du substrat carboné en nanoparticules d'oxydes métalliques comprise dans la plage de 0,2 à 20 % en poids, de préférence de 0,5 à 15 % en poids, par rapport au substrat carboné.

16. Substrat carboné selon l'une des revendications 10 à 15, **caractérisé en ce que** le substrat carboné est pourvu d'au moins un composant catalytiquement actif, en particulier métallique, en particulier par imprégnation, en particulier dans lequel le composant catalytiquement actif est choisi parmi au moins un métal précieux ou un métal semi-précieux ou l'un de ses sels, de préférence dans le groupe du platine, du palladium, du cuivre, de l'argent, de l'or, du ruthénium, du rhodium, de l'iridium et de l'osmium, ainsi que de leurs combinaisons et des sels correspondants.

17. Utilisation d'un substrat carboné selon l'une des revendications 10 à 16 en tant que catalyseur ou pour la fabrication de catalyseurs, en particulier en tant que matériau support pour catalyseurs.

18. Catalyseur contenant un substrat carboné selon l'une des revendications 10 à 16.

19. Catalyseur selon la revendication 18, dans lequel le substrat carboné est pourvu d'au moins un composant catalytiquement actif, en particulier métallique, en particulier par imprégnation, en particulier dans lequel le composant catalytiquement actif est choisi parmi au moins un métal précieux ou un métal semi-précieux ou l'un de ses sels, de préférence dans le groupe du platine, du palladium, du cuivre, de l'argent, de l'or, du ruthénium, du rhodium, de l'iridium et de l'osmium, ainsi que de leurs combinaisons et des sels correspondants.

20. Utilisation d'un substrat carboné selon l'une des revendications 10 à 16 en tant que plaque bipolaire ou pour la fabrication de plaques bipolaires.

21. Plaque bipolaire contenant un substrat carboné selon l'une des revendications 10 à 16.
